# EUROPEAN PATENT SPECIFICATION

(11) **EP 3 708 311 B1**
(45) Date of publication and mention of the grant of the patent: **07.05.2025**
(21) Application number: 20162134.9
(22) Date of filing: 10.03.2020
(51) Int. Cl.: B25J 15/00, B25J 15/06, B25J 19/00

(54) **DEMOLDING ROBOT WITH A 3D PRINTED GRIPPER ADAPTED TO THE SHAPE OF THE MOLD**
ENTFORMUNGSROBOTER MIT EINEM GEDRUCKTEN 3D-GREIFER, DER AN DIE FORM DER FORM ANGEPASST IST.
ROBOT DE DÉMOULAGE AVEC UNE PINCE IMPRIMÉE EN 3D ADAPTÉE À LA FORME DU MOULE

(30) Priority: 11.03.2019 IT 201900003493
(43) Date of publication of application: 16.09.2020
(73) Proprietor: Casagrande Srl, 30125 Santa Lucia di Piave (TV) (IT)
(72) Inventor: RIGONI, Nicola, 36012 Asiago (IT)
(74) Representative: Kraus & Lederer PartGmbB

(56) References cited:
- DE-A1- 102016 212 141
- JP-A- 2018 080 391
- US-A1- 2016 229 100
- CHRIST JOSEF F ET AL: "3D printing of highly elastic strain sensors using polyurethane/multiwall carbon nanotube composites", PROCEEDINGS OF SPIE; [PROCEEDINGS OF SPIE ISSN 0277-786X VOLUME 10524], SPIE, US, vol. 10168, 12 April 2017 (2017-04-12), pages 101680E - 101680E, XP060091227, ISBN: 978-1-5106-1533-5, DOI: 10.1117/12.2259820

## Description

### Field of the invention

The present invention relates to a method for the realisation of a gripper for a plastic molding loading and/or unloading robot, and to the gripper made with the method.

In plastic molding, the pieces exiting the mold are generally picked up or unloaded by means of a robot. In a similar way, said pieces can then be inserted, or loaded, in other processing islands by means of the same robot, or another robot.

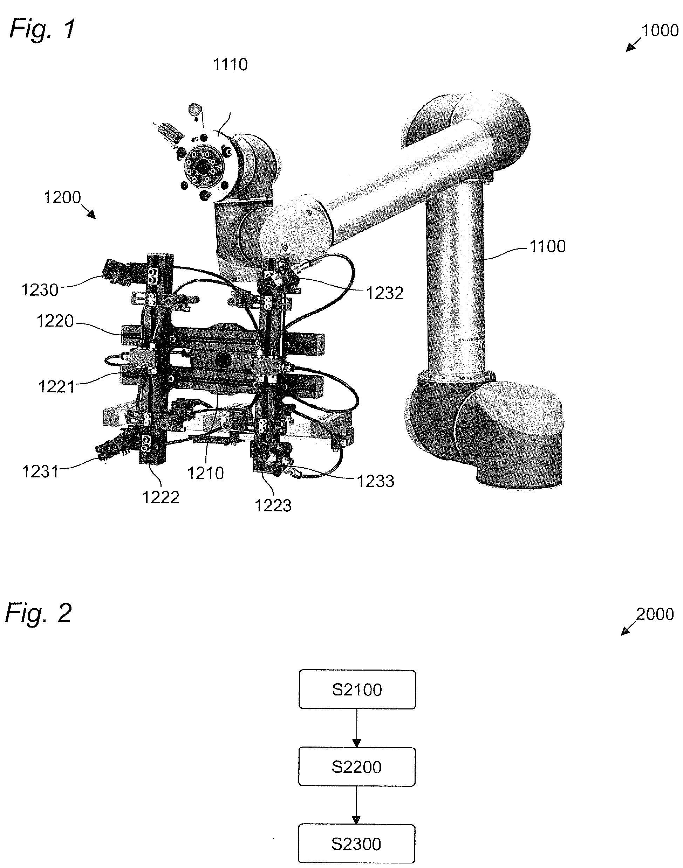

Figure 1 schematically illustrates a loading and/or unloading robot 1000, in particular in the field of plastic molding.

The robot 1000 comprises a robotic arm 1100, movable along one or more axes, and having at the end thereof a connection interface 1110.

A gripper 1200 can be mounted on the robotic arm 1100, so as to allow the robotic arm 1100 to interact with the molded product. The gripper 1200 comprises a connecting interface 1210, complementary to the connecting interface 1110, which allows the gripper 1200 to be mounted and dismounted on/from the robotic arm 1100, according to production needs.

The gripper further comprises one or more profiles 1220-1223 which form a frame supporting one or more tools 1230-1233, or sensors, which interact with the molded product.

The profiles 1220-1223 are assembled with each other so as to form a frame. The assembly methods are various, in general having an assembly by means of screws is however preferred, so that the profiles can be eventually reused. One or more tools and/or sensors 1230-1233 are mounted on the frame thus obtained, such as pliers, cutters, actuators, magnetic sensors, inductive sensors, etc. These can be mounted on the frame in different ways but generally having an assembly by means of screws or similar elements is preferred, so as to allow the various elements to be dismounted in the event of breakage, or when the gripper is no longer necessary.

The reasons that led to this type of solution for the frame of the gripper are different. First of all, with a limited number of profiles it is possible to configure a large number of different frames, so as to adapt to different molds. The limited number of profiles also reduces the cost. It is also possible to assemble a specific frame, and therefore a specific gripper, without resorting to methodologies that require specific skills, such as welding.

However, with the evolution of plastic molding techniques this solution has shown several critical issues.

For example, the positioning flexibility offered by the profiles 1220-1223, both in the assembly with each other and in the positioning of the tools 1230-1233, results in the difficulty in precisely positioning the tools 1230-1233 with each other and with respect to the coordinate system of the robot 1000. In particular, the position of the tools 1230-1233 must often be adjusted in the three dimensions, which makes any positioning error cumulative. By way of example, a positioning error between a first profile and a second profile connected thereto will be added to the positioning error between the second profile and the tool. In complex grippers, the precise positioning of numerous tools can therefore become a complex and time consuming activity.

Furthermore, the use of screws, or other elements that allow subsequent dismounting, for mounting the tools 1230-1233 on the profiles 1220-1223 and/or for the connection of different profiles to each other, has the disadvantage that vibrations and/or shocks induced by the processing, by thermal variations, by the transport of the gripper, by a possible fall of the same, can result in a movement of the tools 1230-1233, and consequently in the need to periodically check their correct positioning.

Finally, the shape itself of the profiles 1220-1223, generally of a rectilinear shape, often introduces limitations and/or complications on how to position the tools 1230-1233 in space. In fact, an ideal positioning with respect to the shape of the molded product is often not possible due to the limitations introduced by the shape of the profiles. In order to try and reduce, at least in part, this disadvantage, the tools 1230-1233 are developed in countless different configurations, so as to convey flexibility limited by the shape of the profiles, however increasing the acquisition costs of the various different tools.

The invention was therefore developed to solve at least in part one or more of these problems and to, more generally, offer a new way of conceiving and realising grippers that is better adapted to modem molding.

Grippers according to the state of the art are known, for instance, from documents US 2016/229100 A1, "3D printing of highly elastic strain sensors using polyurethane/multiwall carbon nanotubes composites" of Josef F. Christ et al, Proc. of SPIE, Vol. 10168 101680E-1, DE 10 2016 212141 A1 and JP 2018 080391 A.

### Summary of the invention

The present invention is based on the generic concept according to which, instead of using profiles to make the frame of the gripper, this can be made of plastic material, by a 3D printing.

Specific embodiments of the invention are defined by the independent claims.

According to example, the invention can refer to a method for the realisation of a gripper for a plastic mold loading and/or unloading robot, the method comprising the steps of: acquiring a mold project, designing the gripper based on the mold project, realising the gripper by a 3D printing.

In this way it is advantageously possible to obtain a precise gripper, easily reproducible and with implementation possibilities not obtainable by gripper according to the state of the art.

In some implementation embodiments, the step of designing the gripper may comprise the steps of: designing, as an integral part of the gripper, supports for pneumatic ducts, and/or designing, as an integral part of the gripper, supports for electric connections.

In this way it is advantageously possible to ideally configure and position the supports, with respect to the configuration of the gripper and the tools thereof. In some implementation embodiments the step of designing the gripper may comprise the step of: designing, as an integral part of the gripper, support elements for a molded object.

In this way it is advantageously possible to obtain supports with a specific shape and positioning so as to interface with the molded object.

In some implementation embodiments, the step of realising the gripper may comprise the realisation of the gripper with material PA6 or with a material based on Polylactic Acid and additivated with graphene.

In this way it is advantageously possible to obtain a gripper with ideal mechanical characteristics.

A further implementation embodiment of the invention may relate to a gripper for a plastic molding loading and/or unloading robot, where the gripper is made by a 3D printing.

In this way it is advantageously possible to obtain a precise gripper, easily reproducible and with implementation possibilities not obtainable by gripper according to the state of the art.

In some implementation embodiments the gripper may further comprise a support element for a molded object.

In this way it is advantageously possible to obtain supports for interfacing and/or supporting the molded object.

In some implementation embodiments, the support element can have a shape substantially complementary to at least part of the molded object.

In this way it is advantageously possible to obtain supports with a specific shape and positioning so as to interface with the molded object.

In some implementation embodiments the gripper may further comprise a plurality of supports for pneumatic ducts and/or electrical connections made as hollow sections of the gripper.

In this way it is advantageously possible to ideally configure and position the supports, with respect to the configuration of the gripper and the tools thereof. In some implementation embodiments the gripper may further comprise a plurality of structural lamellae, where the supports are made as hollow sections of the structural lamellae.

In this way it is advantageously possible to integrate the supports in the structure of the gripper so as to let slide the elements supported in the proximity of the gripper, thus keeping the overall dimensions of the gripper contained.

In some implementation embodiments the gripper may further comprise a plurality of supports for pneumatic ducts and/or electrical connections made with the same material and as an integral part of the gripper.

In this way it is advantageously possible to realise the supports with the same manufacturing process as the gripper, without introducing additional and/or external elements which would increase the cost and complexity of the gripper.

### Short list of Figures

Further characteristics and advantages of the invention will become clearer from the examination of the following detailed description of preferred but not exclusive embodiments, illustrated only by way of non-limiting example, with the support of the accompanying drawings.

In the drawings the same reference numbers identify the same components. In particular:
- figure 1 schematically illustrates a loading and/or unloading robot, in particular in the field of plastic molding, according to the state of the art;
- figure 2 schematically illustrates a method for the realisation of a gripper 3200 according to an implementation embodiment of the invention;
- figures 3A, 3B, 3C and 3D schematically illustrate different perspective views of a gripper 3200 according to an implementation embodiment of the invention;
- figure 4 schematically illustrates a perspective view of a gripper 4200 according to an implementation embodiment of the invention.

### Detailed description of implementation embodiments

Figure 2 schematically illustrates a method 2000 for the realisation of a gripper 3200 according to an implementation embodiment of the invention. In particular, the method 2000 comprises a first step S2100 consisting in acquiring a mold project, preferably in a CAD format. Any CAD format, in particular a format for 3D CAD, for example an IGS or STP format, can be used.

Thanks to this step it is possible to obtain the shape of the mold, as well as the shape of the molded object, which allows designing a gripper 3200 that takes into consideration these elements, as well as the kinematic mechanism of the mold and the movement needed by the gripper 3200 to pick up the molded object.

Thanks to this step it is therefore advantageously possible to view all the data necessary for the design of the gripper 3200 and, if necessary, to proceed to the next step, that is to the design step S2200 by using the same CAD environment, which advantageously allows to considerably reduce the design times.

In step S2200 the gripper 3200 is then designed based on the mold project. The possibility of designing the gripper in an integrated manner in the 3D file of the mold makes it possible to view the kinematic mechanism of the mold comprising the extraction of the molded piece and the operation of the gripper 3200; all in a single environment, therefore with a real view of the process.

The gripper 3200 is then made in a step S2300 by a 3D printing. In this way, the gripper 3200 can be advantageously made in a desired number of copies, all identical, in a short period.

The method 2000 allows obtaining a whole series of advantages not obtainable with the grippers of the state of the art.

In particular, it is advantageously possible to obtain a gripper 3200 which has a shape adapted to the mold and/or the molded piece, which guarantees an ideal grip of the aforementioned piece.

Furthermore, thanks to the possibility of realising the project for the gripper 3200 directly based on the CAD project of the mold, an ideal correspondence between the gripper 3200 and the mold and/or the molded product can be guaranteed, in contrast to the gripper 3200 of the state of the art which, being made by hand, and with profiles having predetermined shapes, offers significantly reduced flexibility and design precision. This advantageously allows reducing waste caused by the instability and/or inaccuracy of the gripper 3200 with traditional systems.

Thanks to the design of the gripper 3200 integrated in the mold design, and thanks to the design flexibility allowed by the realisation by 3D printing, it is possible to improve the kinematic mechanism of the gripper 3200, ensuring a greater speed of exit of the robotic arm outside the overall dimensions of the press with the consequent reduction of the molding cycle times.

It is also possible to guarantee contemporaneity and precision of sprue cutting, it being also improved as to the cycle times of the press, thus zeroing the costs for equipment placed downstream for cutting the same sprue.

The method 2000 also allows realising a desired number of grippers, identical to each other, in rapid times. This allows, on the one hand, replacing a repeated work of toolmakers with a single design by a single designer. The setup times of the gripper 3200 are also greatly reduced, with a reduction in costs, since it is no longer necessary to equip each gripper 3200 in a complex way, in particular ensuring not only the position but also the correct orientation in space of the tools 1230-1233, but it is sufficient to insert the tools in the target seats. In the event of breakage, the gripper 3200 can also be easily and quickly replicated, which allows it to be replaced immediately, without any checks or adjustments.

Through these advantages, machine downtime and production loss are substantially reduced, if not zeroed, with a clear reduction in costs, while guaranteeing an increase in quality.

Furthermore, in the case of moldings made at third-party factories, it is not necessary to rely on the skills of local toolmakers, for implementing grippers in place, or physically send the ready-made grippers, it will be instead sufficient to transfer the gripper project 3200 obtained under step S2200, to allow the implementation of step S2300 in a different location.

The customization of the gripper 3200 as a function of the product also leads to the further advantage of making the company more competitive with respect to the competition as it inevitably strengthens the bond with the customer who would have a further constraint in having other companies molded his product.

Furthermore, the method 2000 allows concentrating the design of the gripper 3200, under step S2200, in one professional role.

In some implementation embodiments, the step of designing S2200 the gripper 3200 comprises one or more of the following steps.

Starting from the 3D file of the mold positioned in the molding press and positioned in the extraction position, all the 3D of the complete mold is taken in order to have all the overall dimensions and precision.

In a design step, the type of gripper 3200 to be realised is defined, that is if it only picks up from the mold and deposits, for example on a conveyor belt or in a collection container, or if the cut of the sprue must also be considered, or if it is necessary to insert a component that must be overmolded or to insert a dimensional check with a camera, etc. In a following step the tools 1230-1233 to be added to the gripper 3200 are chosen, for example suction cups, pliers, pistons/actuators, shears for sprue cutting, cameras for dimensional check etc.

In a design step, supports 3260 for pneumatic ducts and/or supports 3260 for electrical connections are designed as an integral part of the gripper. In particular, depending on the tool 1230-1233 it is proceeded with the design of the interlocking through compressed air ducts, in the case of pneumatic actuators, or of the power supply and/or of the control and/or feedback signals, in the case of air and electrical sensors, cameras, etc. For example, clips can be designed as an integral part of the gripper 3200 which allow the housing of the air channels or of the signal or power conductors so as to prevent said cables or tubes from interfering in the normal operating function of the gripper 3200 or complicating the tooling activities of the injection press.

In a subsequent step a compressed air manifold can be designed - with adequate numbering for the various functions in order to avoid errors in the interlocking wiring - for the orderly sorting of the air pipes of the various users.

In one design step, compressed air ducts can be designed integrated with the gripper 3200, for example such as empty channels in the material printed with a 3D printer, so as to avoid the need for external ducts.

In a design step, support elements 3240, 3241 for a molded object can be made as an integral part of the gripper 3200. In particular, it is advantageously possible to form some parts of the gripper 3200 so as to have a complementary shape to some parts of the molded object which must be taken and/or processed by the gripper 3200. This allows the gripper to provide stable support to the molded object and to allow more precise processings thereon, avoiding the movement and/or flexion thereof.

In a design step one or more connection interfaces 3210 can be realised for the connection of the gripper 3200 to the robot, in particular in such a way that it can be positioned on different robots. As an example, a single connection interface 3210 can be implemented for assembly on Engel automation robots, Piovan Star automation robots and Tecnomatic automation robots.

In some implementation embodiments, the step of realising the gripper 3200 may comprise one or more of the following steps.

The file generated at the end of the design S2200 provides the basis for physically realising the gripper 3200 by 3D printing. Through 3D printing management software, the file is transformed into an STL file. Once the correct and printable STL file is obtained, it is transferred to the 3D printer which starts the printing process and the required copies are made.

Various 3D printing technologies have been evaluated for the gripper 3200, for example rapid prototyping in stereolithography and sintering, as well as various thermoplastic materials. Stereolithography and sintering have proven to be less advantageous, due to the fragility and difficulty of making different colours of the same product. It will be clear that different 3D printing technologies exist and the expert in the sector will be able to select from time to time the most suitable process for the type of product to be made, in particular according to the specific use and also according to the type of material that the designer considers as the most performing in the specific context. Their main differences are related to the way in which the layers are printed. In some first practical realisations the inventors have identified as particularly advantageous the 3D printing process known as SLS, that is Selective Laser Sintering, which is an additive manufacturing technology that uses a laser beam to sinter plastic powder inside a closed room. Other technologies that have proved to be particularly advantageous are FDM, i.e. Fused Deposition Modeling, or DLP, i.e. a liquid polymer tank that is exposed to the light of a DLP projector under conditions of inattinic light. The exposed liquid polymer hardens. The building plate then moves downward by small increments and the liquid polymer is again exposed to light. The process is repeated until the pattern is built. The liquid polymer is then drained from the tank, leaving the solid model.

As regards the printing materials, the same considerations made above apply, that is, an expert in the 3D printing sector will, from time to time, based on the needs related to the specific application, select the most suitable material. By way of example, the inventors have however noted a particular advantageous result achieved with PA6, Nylon. In other advantageous implementation embodiments, GRAFYLON^{®} 3D Ø 1,75 MM - 700 G Model 1PLAGRAF7 was used, a 3D printing material based on PLA, that is Polylactic Acid, additivated with graphene, to offer excellent mechanical performance and aesthetics. In contrast, ABS, a non-structural thermoplastic, proved to have less resistance to stress than PA6. As an alternative, the material ULTEM was considered comparable to the yield obtained with PA6 but proved to be more expensive and difficult to find for the use of 3D printers.

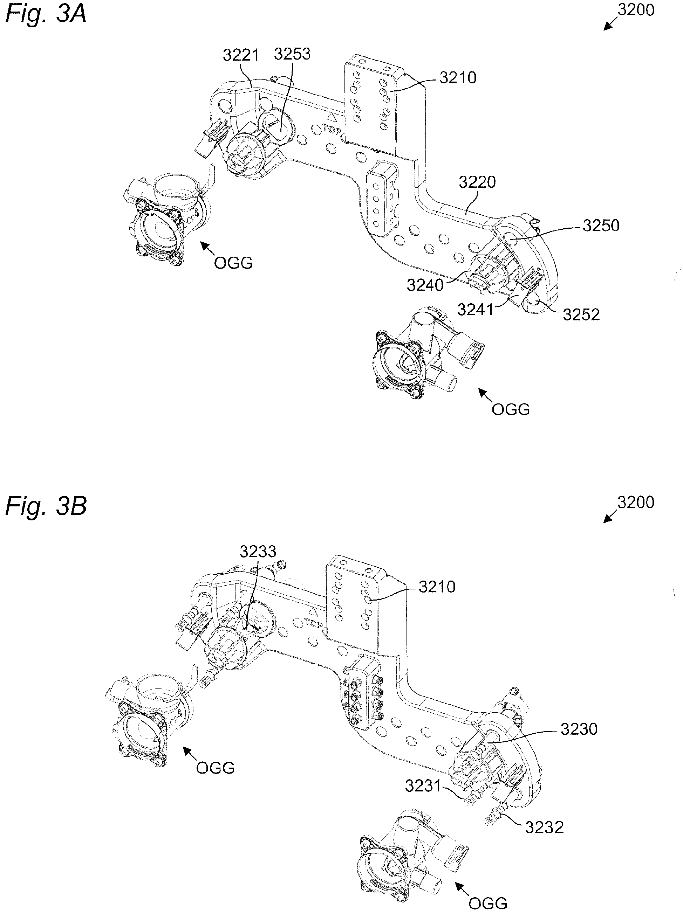

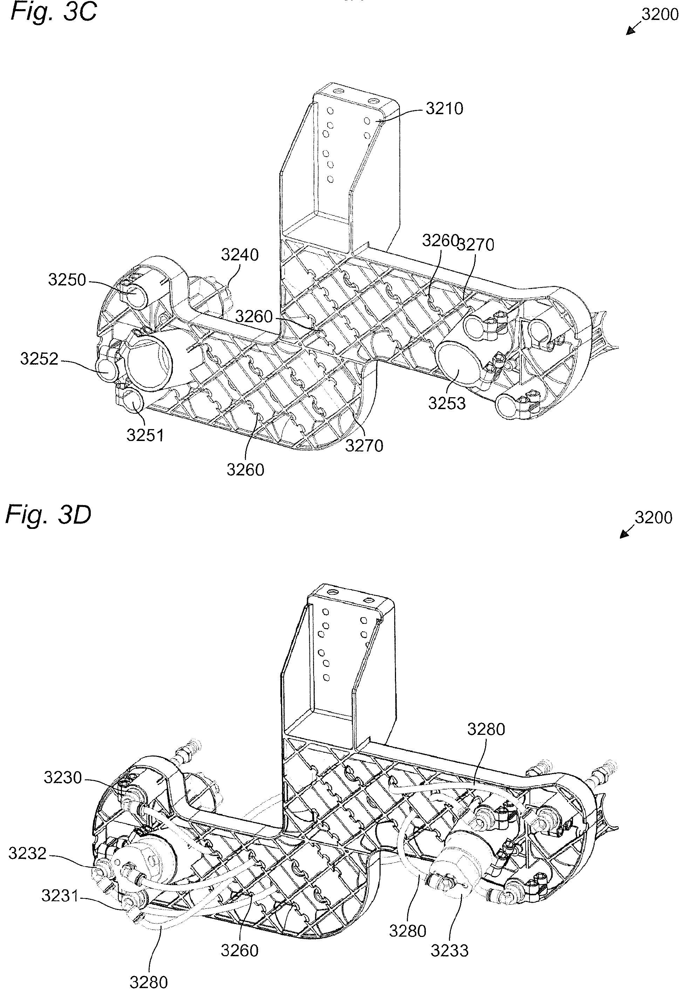

Figures 3A, 3B, 3C and 3D schematically illustrate a gripper 3200 according to an implementation embodiment of the invention. Figure 3A shows the gripper 3200 together with two molded objects OGG. Figure 3B also shows the tools 3230-3233 mounted on the gripper 3200. Figure 3C shows the rear side of the gripper 3200. Figure 3D illustrates the configuration including pneumatic ducts and/or electrical connections.

In particular, the gripper 3200 allows processing and extracting from the mold two objects molded simultaneously. It will be clear that in alternative embodiments of the invention, the number of molded objects to be processed and extracted from the mold can be any number. It will also be clear that it is not necessary for the gripper to be configured to process and extract from the mold, it is sufficient that it can extract from the mold, for completeness of description it has been preferred to illustrate an implementation embodiment which also allows processing.

The gripper 3200 comprises a connection interface 3210 that allows the connection of the gripper 3200 to different robots. In particular, as is visible, the connection interface 3210 is substantially a flange comprising several holes, at different distances, which correspond to as many standards of different robots. This configuration advantageously allows the gripper 3200 to be used with various robots from different manufacturers.

The gripper 3200 further comprises two arms, 3220, 3221, having a substantially identical function, whereby only one arm will be described.

The arm 3220 comprises a support element 3240, intended to support, at least in part, a molded object OGG. The support element 3240 has a complementary shape to at least part of the molded object OGG.

With complementary form

In particular, in the illustrated implementation embodiment, the molded object OGG has a substantially cylindrical cavity and the support element 3240 has a lamellar shape with the external part of the lamellas 3270 defining a shape at least partially substantially cylindrical. Advantageously, the size of the cylindrical lamellar shape substantially corresponds to that of the cylindrical cavity, so as to allow the object OGG to be supported at least partially by the support element 3240. In some implementation embodiments, making an advantageous use of the flexibility of the lamellae 3270, it will be possible to have a size of the cylindrical lamellar shape that is slightly higher than that of the cylindrical cavity, so as to exert a slight pressure on the internal part of the cylindrical cavity in order to support the object OGG more stably.

The arm 3220 further comprises a further support element 3241, intended to support, at least in part, a molded object OGG. The support element 3241 has a complementary shape to at least part of the molded object OGG.

In particular, in the illustrated implementation embodiment, the molded object OGG has a substantially cylindrical external surface and the support element 3241 has a concave shape which defines a shape substantially corresponding to a cylinder arc. Advantageously, the size of the cylinder arch shape substantially corresponds to that of the substantially cylindrical external surface, so as to allow the object OGG to be supported at least partially by the support element 3241.

The presence of the support element 3240, 3241 allows the gripper to carry out processings on the molded object OGG, for example the cutting of the sprue, which normally would instead be performed in a subsequent processing step. In particular, the possibility of guaranteeing a stable support to the object OGG, with support elements 3240, 3241 having surfaces designed in a substantially complementary way to the shape of the object, whose realisation is possible thanks to the 3D printing process, allows ensuring a precise and stable position of the object OGG on the gripper, which makes processings on the gripper 3200 possible, which would not otherwise be possible with a state-of-the-art gripper.

As is visible in Figure 3B, the gripper 3200 can mount a plurality of tools 3230-3233, housed in respective seats 3250-3253. The tools can be of any type, and it will be clear that the seats will be designed with the appropriate dimensions and orientation for each respective tool. In the illustrated implementation embodiment, the tools 3230-3232 are suction cups while the tool 3233 is a plier. It will be clear that other real known tools can be implemented in the gripper 3200.

As is visible in Figure 3C, in some implementation embodiments, the gripper 3200 comprises a plurality of supports 3260 for pneumatic ducts and/or electrical connections.

Generally these supports have a shape such that it is possible to support the ducts and/or connections by inserting them inside the support and keeping them in position by means of an elastic deformation of the support and/or of the element to be supported. In other words, the supports 3260 act as "clips" inside which the elements to be supported are positioned. More generally, the supports 3260 are characterized by being formed of the same material that forms the gripper 3200, thus allowing an integrated realisation of the gripper 3200 and the supports 3260.

In the illustrated implementation embodiment the supports 3260 are generally hollow sections in structural lamellae 3270 of the gripper 3200, these hollow sections having a substantially circular shape, with an opening on a circular arc having a size comprised between 30 and 120 degrees.

The structural lamellas 3270 are basically in the form of a plane with extension substantially perpendicular to the plane defined by the two maximum dimensions of the gripper 3200. Thanks to this configuration, the structural lamellae 3270 allow conferring stability and sturdiness to the gripper 3200, limiting the weight thereof. In the illustrated implementation embodiment there are two groups of structural lamellas 3270 oriented in a crossed manner with each other and, preferably, in a substantially perpendicular manner, increasing the sturdiness of the gripper 3200. Thanks to this configuration, it is also possible to realise channels, between two parallel structural lamellae 3270, inside which the elements to be supported slide, which are then held in position by the supports 3260 made in the crossed structural slats 3270.

This configuration allows organizing in a stable manner the elements to be supported, such as pneumatic ducts and/or electrical connections. As is visible in 3D figure, the pneumatic ducts and/or electrical connections 3280 can be positioned and held in position by the supports 3260, thus avoiding that these elements can move and accidentally come into contact with other elements. The realisation of the supports 3260 as a cavity inside the lamellae allows the pneumatic ducts and/or electrical connections to be conveyed at the same level as the lattice formed by the structural lamellae 3270, thus keeping the external dimensions of the gripper 3200 limited. However, it will be clear that other forms and/or positions of the supports 3260 are possible, for example of the supports 3260 with a hollow shape substantially like a C, where the cavity of the shape allows the insertion of the pneumatic duct and/or of the electrical connection 3280, and made on any surface of the gripper 3200.

As is clear from the foregoing description, compared to a traditional gripper, an advantage offered by the present patent application is the versatility of the gripper 3200, which can be designed and manufactured for the specific mold. A further advantage is the reduced weight, which makes the robot work easier, faster, cheaper and allows using robots with lower specifications, reducing their cost.

A further advantage of the gripper 3200 consists of the realisation time. The inventors have determined that with less than 10 hours of design, obviously dependent on the specifications of the gripper 3200 and the object, are necessary to precisely design the optimal gripper 3200 for the specific mold. Following this design step S2200, the 3D printing step S2300 is relatively fast and, above all, can be done in parallel for different grippers 3200. This way of realising the gripper 3200 does not require adjustments in the tooling step since the precision thereof is studied by CAD integrating it with the mold process to which it is dedicated.

It follows that precision and the absence of skilled labor are other advantageous elements as well as the possibility of integrating in the same structure of the gripper 3200 different tools that are difficult to integrate into the gripper known by the state of the art due to precision limitations, set-up speed, and design and manufacturing flexibility of the grippers.

Furthermore, thanks to the specific design and construction of a mold, with the invention it is possible to realise a gripper 3200 with more elaborate geometries and with reduced dimensions compared to the traditional mechanical gripper.

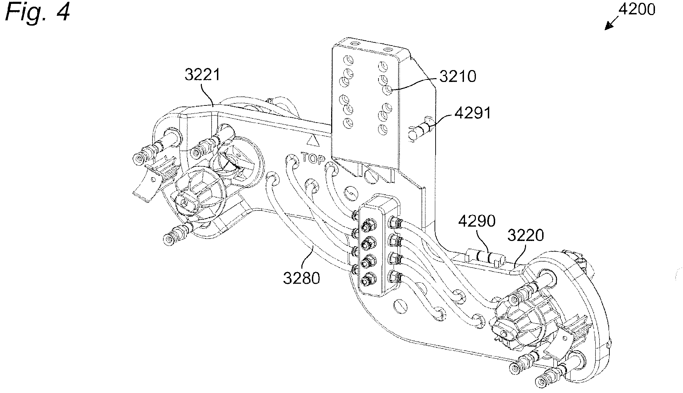

Figure 4 schematically illustrates a perspective view of a gripper 4200 according to an implementation embodiment of the invention.

In particular, the gripper 4200 differs from the gripper 3200 thanks to the presence of one or more levelling elements 4290, 4291 inserted in special seats made as an integral part of the gripper 4200. In the illustrated implementation embodiment, the levelling elements 4290, 4291 are bubble levels. Thanks to the possibility of realising the appropriate seats while designing the gripper 4200, it is possible to realise the seats with a precise orientation such that, when the gripper is in use, for example, in the default mounting position on the robotic arm 1100, the levelling elements 4290, 4291 indicate to the operator if the positioning of the gripper 4200 corresponds to a predetermined direction of the gripper in space. For example, it will be possible to realise the seats of the levelling elements 4290, 4291 so that, during the mounting step of the gripper on the robotic arm, the levelling elements 4290, 4291 respectively indicate a correct vertical and horizontal alignment, thus confirming to an operator that the gripper 4200 was assembled on the robotic arm 1100 correctly.

The invention has been described with reference to various characteristics, possibly illustrated as belonging to a single implementation embodiment. However, it will be clear that for implementing the invention it will not be necessary to implement all the characteristics of a single implementation embodiment described and any combination of characteristics will form the basis of an implementation embodiment according to the invention as defined by the appended claims. It will also be clear that features of different implementation embodiments can be combined with each other resulting in new implementation embodiments of the invention as defined by the appended claims.

### REFERENCE NUMBERS

1000: loading and/or unloading robot
1100: robotic arm
1110: connection interface
1200: gripper
1210: connection interface
1220-1223: profile
1230-1233: tool
2000: method
S2100: acquire
S2200: design
S2300: realise
3200: gripper
3210: connection interface
3220, 3221: arm
3230-3233: tool
3240, 3241: support element
3250-3253: seat for tool
3260: supports
3270: structural lamellae
3280: pneumatic ducts and/or electrical connections
4200: gripper
4290, 4291: levelling elements

## Claims

1. Method for the realisation of a gripper (3200) for a plastic molding loading and/or unloading robot, the method comprising the steps of:
acquiring (S2100) a mold project,
designing (S2200) the gripper (3200) based on the mold project,
realising (S2300) the gripper (3200) by a 3D printing,
**characterized in that**
the step of designing (S2200) the gripper (3200) comprises the steps of:
designing, as an integral part of the gripper (3200), supports (3260) for electrical connections made as hollow sections of the gripper (3200),
wherein the gripper (3200) further comprising a plurality of structural lamellae (3270), and supports (3260) are made as hollow sections of the structural lamellae (3270).

2. The method according to claim 1, where the step of designing (S2200) the gripper (3200) comprises the step of:
designing, as an integral part of the gripper (3200), support elements (3240, 3241) for a molded object.

3. The method according to any one of the preceding claims, where the step of realising (S2300) the gripper (3200) comprises the realisation of the gripper (3200) with material PA6 or with a material based on Polylactic Acid and additivated with graphene.

4. Gripper (3200) for a plastic molding loading and/or unloading robot,
wherein the gripper (3200) is made by a 3D printing,
**characterized by** comprising
a plurality of supports (3260) for electrical connections (3280) made as hollow sections of the gripper (3200),
a plurality of structural lamellae (3270),
where the supports (3260) are made as hollow sections of the structural lamellae (3270).

5. Gripper (3200) according to claim 4, further comprising a support element (3240, 3241) for a molded object (OGG).

6. Gripper (3200) according to claim 4, where the support element (3240, 3241) has a shape substantially complementary to at least part of the molded object (OGG).

7. Gripper (3200) according to any one of claims 4 to 6,
wherein the supports (3260) are made of the same material and as an integral part of the gripper (3200).

## Patentansprüche

1. Verfahren zur Realisierung einer Greiferbacke (3200) für einen Roboter zum Laden und/oder
Entladen von Kunststoffformen, wobei das Verfahren die folgenden Schritte umfasst:
Erfassen (S2100) eines Formprojekts,
Entwerfen (S2200) der Greiferbacke (3200) auf der Grundlage des Formprojekts,
Realisieren (S2300) der Greiferbacke (3200) durch einen 3D-Druck,
**dadurch gekennzeichnet, dass**
der Schritt des Entwerfens (S2200) der Greiferbacke (3200) die folgenden Schritte umfasst:
Entwerfen, als ein integraler Bestandteil der Greiferbacke (3200), von Halterungen (3260) für elektrische Verbindungen, die als hohle Abschnitte der Greiferbacke (3200) hergestellt sind,
wobei die Greiferbacke (3200) ferner eine Vielzahl von Strukturlamellen (3270) umfasst und die Halterungen (3260) als hohle Abschnitte der Strukturlamellen (3270) hergestellt sind.

2. Verfahren nach Anspruch 1, wobei der Schritt des Entwerfens (S2200) der Greiferbacke (3200) den Schritt umfasst:
Entwerfen, als ein integraler Bestandteil der Greiferbacke (3200), von Halterungselementen (3240, 3241) für einen geformten Gegenstand.

3. Verfahren nach einem der vorstehenden Ansprüche, wobei der Schritt des Realisierens (S2300) der Greiferbacke (3200) das Realisieren der Greiferbacke (3200) mit dem Material PA6 oder mit einem Material auf Basis von Polymilchsäure, additiviert mit Graphen, umfasst.

4. Greiferbacke (3200) für einen Roboter zum Beladen und/oder Entladen von Kunststoffformen, wobei die Greiferbacke (3200) durch 3D-Druck hergestellt wird,
**dadurch gekennzeichnet, dass** sie Folgendes umfasst
eine Vielzahl von Halterungen (3260) für elektrische Verbindungen (3280), die als hohle Abschnitte der Greiferbacke (3200) hergestellt sind,
eine Vielzahl von Strukturlamellen (3270),
wobei die Halterungen (3260) als hohle Abschnitte der Strukturlamellen (3270) hergestellt sind.

5. Greiferbacke (3200) nach Anspruch 4, ferner umfassend ein Halterungselement (3240, 3241) für einen geformten Gegenstand (OGG).

6. Greiferbacke (3200) nach Anspruch 4, wobei das Halterungselement (3240, 3241) eine Form aufweist, die im Wesentlichen komplementär zu mindestens einem Teil des geformten Gegenstandes (OGG) ist.

7. Greiferbacke (3200) nach einem der Ansprüche 4 bis 6,
wobei die Halterungen (3260) aus demselben Material und als ein integraler Bestandteil der Greiferbacke (3200) hergestellt sind.

## Revendications

1. Procédé de réalisation d'une pince (3200) pour un robot de chargement et/ou de déchargement de moulage de plastique, le procédé comprenant les étapes suivantes :
l'acquisition (S2100) d'un projet de moule,
la conception (S2200) de la pince (3200) sur la base du projet de moule,
la réalisation (S2300) de la pince (3200) par une impression 3D,
**caractérisé en ce que**
l'étape de conception (S2200) de la pince (3200) comprend les étapes suivantes :
la conception, en tant que partie intégrante de la pince (3200), des supports (3260), pour les connexions électriques, réalisés en tant que sections creuses de la pince (3200),
la pince (3200) comprenant en outre une pluralité de lamelles structurelles (3270), et les supports (3260) sont réalisés comme des sections creuses des lamelles structurelles (3270).

2. Procédé selon la revendication 1, où l'étape de conception (S2200) de la pince (3200) comprend l'étape suivante :
la conception, en tant que partie intégrante de la pince (3200), des éléments de support (3240, 3241) pour un objet moulé.

3. Procédé selon l'une quelconque des revendications précédentes, où l'étape de réalisation (S2300) de la pince (3200) comprend la réalisation de la pince (3200) avec le matériau PA6 ou avec un matériau à base d'acide polylactique et additivé avec du graphène.

4. Pince (3200) pour un robot de chargement et/ou de déchargement de moulage de plastique, la pince (3200) étant fabriquée par une impression 3D,
**caractérisée en ce qu'**elle comprend
une pluralité de supports (3260), pour les connexions électriques (3280), réalisés comme des sections creuses de la pince (3200),
une pluralité de lamelles structurelles (3270),
où les supports (3260) sont réalisés comme des sections creuses des lamelles structurelles (3270).

5. Pince (3200) selon la revendication 4, comprenant en outre un élément de support (3240, 3241) pour un objet moulé (OGG).

6. Pince (3200) selon la revendication 4, où l'élément de support (3240, 3241) a une forme sensiblement complémentaire à au moins une partie de l'objet moulé (OGG).

7. Pince (3200) selon l'une quelconque des revendications 4 à 6,
les supports (3260) étant réalisés dans le même matériau et comme faisant partie intégrante de la pince (3200).
